# EUROPEAN PATENT SPECIFICATION

(11) **EP 2 675 026 B1**
(45) Date of publication and mention of the grant of the patent: **04.09.2019**
(21) Application number: 13171369.5
(22) Date of filing: 11.06.2013
(51) Int. Cl.: H02G 1/12, B26B 1/04, B26B 1/00

(54) **Electrician's tool having a foldable blade for stripping an electrical conductor**
Elektroinstallateurswerkzeug mit klappbarer Klinge zum Abisolieren eines elektrischen Leiters
Outil d'électricien ayant une lame pliable pour la désorption d'un conducteur électrique

(30) Priority: 14.06.2012 FR 1201705
(43) Date of publication of application: 18.12.2013
(73) Proprietor: Stanley Works (Europe) GmbH, 8600 Dübendorf (CH)
(72) Inventor: Chan, Yi Tung, 422 TAICHUNG (TW); Bignon-Zillhardt, Julian, 91170 Viry Châtillon (FR); Lee, Chihchiang, 40354 Taichung (TW)
(74) Representative: SBD IPAdmin

(56) References cited:
- EP-A2- 0 704 951
- DE-B3-102007 032 399
- FR-A1- 2 818 040
- JP-Y- S5 033 655
- US-A1- 2002 059 730
- US-A1- 2008 271 255
- US-B1- 7 984 553

## Description

The present invention relates to an electrician's tool having a foldable blade for stripping an electrical conductor, the tool being of the type comprising an elongated body which extends along a longitudinal axis X-X; at least one retractable cutting blade, pivotally articulated to the body, the blade being movable between a rest position in which it is closed, retracted inside the body, and a working position in which it is open, completely extended from the body.

In the field of industrial maintenance it is usual to act on electrical conductors covered with a sheath, in order to eliminate a portion of this sheath by a stripping operation.

It is known from FR-A1-2 816 865 to use a knife having a foldable blade to cut the outer layer of insulation from an elongated cable. The tool comprises a sleeve on which is mounted at least one blade which pivots between a position in which it is at least partially retracted inside the sleeve and an extracted working position. A locking member secures the blade in the extracted position. The tool allows a tangential cut of the insulating sheath in the longitudinal direction, but also a circular radial cut of an insulating sheath, prior to removal in the longitudinal direction of the sheath portion cut in this way. However, the tool involves a risk of the user being cut during the radial cut.

The pre-characterising features of claim 1 are known from US 2008/271255 A1. A cable stripping tool is also known from FR 2 818 040 A1, JP S50 33655 Y and DE 10 2007 032399 B3.

According to one aspect, an object of the invention is to improve the safety of the user during stripping of an electrical conductor.

To this end, the invention relates to a tool of the above-mentioned type, the body of which comprises a notch having a concave shape, the notch being provided with a channel which is transverse in relation to the axis X-X and intended to receive an electrical conductor, the cutting edge of the blade interfering in the profile of the channel in order to strip the conductor when the blade is in a virtually closed position.

The invention thus prevents risks of cutting the user and allows rapid circumferential cutting of the conductor, the tool also being ergonomic and simple to produce.

According to other features:
- an opening member locks the blade in a completely open position, extracted from the body;
- the tool is a knife.

According to another aspect, an object of the present disclosure is to improve the foldable blade by combining it with an additional cable stripping device. This problem is solved by the fact that, in a tool of the type indicated above, the body is further provided with a recess delimiting a cable support head and in that the tool further comprises a knife holder which is received in a sliding manner in relation to the body substantially along the longitudinal axis X-X and the free end of which is arranged in the recess (3), facing the support head; a cable sheath incision knife which is supported by the knife holder and the cutting portion of which is capable of extending beyond the free end of the knife holder; a biasing means which acts on the knife holder to displace it towards the support head; a gripping means which is rigidly connected to the knife holder for manoeuvring it; the knife holder being movable between an advanced position in which the incision knife is moved closer to the support head under the action of the biasing means and a retracted position in which the incision knife is moved away from the support head against the action of the biasing means, the gripping means being arranged adjacent to the free end of the knife holder and comprising a bearing face adapted to receive the cable to be engaged in the support head.

According to other features:
- the bearing face is oriented in relation to the longitudinal axis X-X such that a force F applied to the cable in a direction substantially transverse to the sliding direction of the knife holder acts on the knife holder with an axial force component Fix capable of displacing the knife holder from its advanced position towards its retracted position against the action R of the biasing means;
- the gripping means is arranged so as to project laterally, at least in part, from the support head, and in that the bearing face is inclined in relation to the longitudinal axis X-X of the body, laterally from the end of the knife holder towards the end of the body opposite the head, moving away from the longitudinal axis X-X, the inclination being between 45° and 90°, preferably 65°;
- the member for opening the blade prevents the knife holder from sliding from the advanced position towards the retracted position when the blade is extracted at least in part from the body.

According to another aspect, a further object of the present disclosure is to improve the tool of the above-mentioned type by also combining it with another, improved cable stripping device and by facilitating maintenance thereof. This problem is solved by the fact that, in a tool of the above-mentioned type, the body further comprises a cable support head in relative movement in relation to a knife holder which is connected to the body, and in that the knife holder receives a socket supporting an incision knife provided with a shaft, and in that a clip arranged in a movable manner inside the socket is provided with a locking/unlocking opening intended to interact with a groove arranged on the shaft of the knife.

The knife is thus kept locked in relation to the socket by means of a releasably securable clip which acts on the end of the knife opposite the cutting portion thereof.

More particularly, it is provided that
- the knife holder receives the socket in a sliding manner substantially along the longitudinal axis X-X;
- the knife holder receives a knob such that said knob can rotate relative to the knife holder, which knob is provided with an internal tapping which acts on an external thread of the socket in order to displace it in a sliding manner.

The invention and the advantages thereof will be better understood upon reading the following description which is given merely by way of example and with reference to the appended drawings, in which:
- Fig. 1 is a perspective view of a tool according to the invention,
- Fig. 2 is an exploded perspective view of the tool from Fig. 1,
- Fig. 3 and 4 are longitudinal sectional views of the tool from Fig. 1, respectively showing the tool provided with an auxiliary cutting blade in a retracted and an extended position according to the invention,
- Fig. 5a to 5c are longitudinal sectional views of the tool from Fig. 1, showing the operation of the tool according to the invention and the placement of a cable,
- Fig. 6 is an exploded perspective view of the incision knife sub-assembly of the tool from Fig. 2,
- Fig. 7a is a plan view of the clip of the knife sub-assembly from Fig. 6 with partial cut-away and in the direction of the arrow VII in Fig. 6,
- Fig. 7b is a sectional view of the clip from Fig. 7a along the line B-B,
- Fig. 8a is a sectional view in the direction of the arrows VIII in Fig. 3, showing the knife of the sub-assembly from Fig. 6 in the locked state,
- Fig. 8b is a partial sectional view similar to Fig. 8a, showing the knife of the sub-assembly from Fig. 6 in the unlocked state,
- Fig. 8c is a partial perspective view along the line C-C in Fig. 8b, showing the lower recess of the socket of the sub-assembly from Fig. 6,
- Fig. 9 is a plan view with partial cut-away of the tool from Fig. 1, showing the operation for stripping an electrical conductor using the auxiliary cutting blade,
- Fig. 10 is a plan view with partial cut-away on an enlarged scale, showing a detail from Fig. 9,
- Fig. 11 is a partial view from below of the tool from Fig. 9.

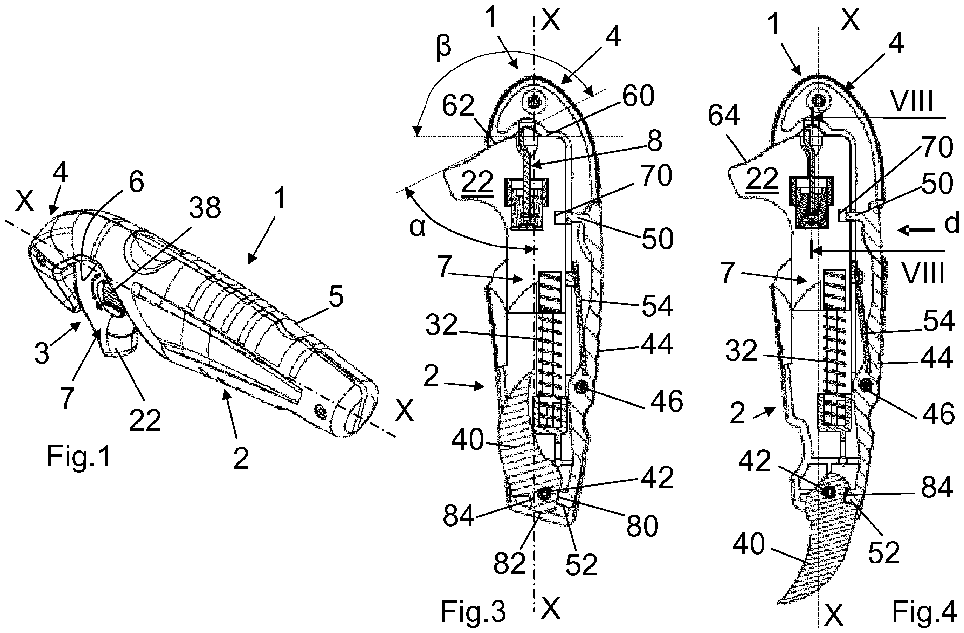

The terms "lower", "upper", "right" and "left", "top" and "bottom" used in the following description are understood according to the orientation of Fig. 3 to 5c.

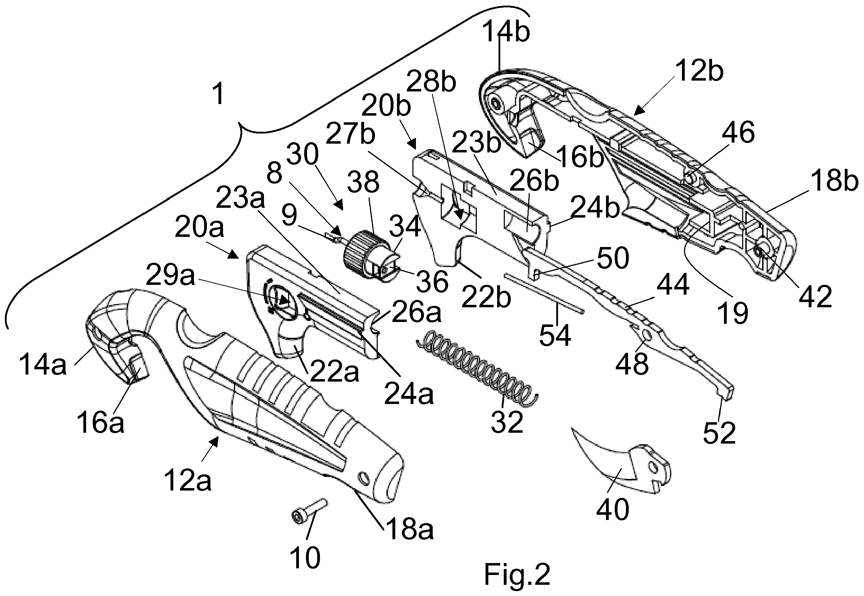

Fig. 1 and 2 show a particularly ergonomic and compact manual cable stripping tool. "Cable stripping tool" is understood to mean a cutting tool for stripping or unsheathing, that is to say removing the insulating covering, of a conductor, in particular of an electric cable.

The tool 1 comprises an elongated body 2 which extends along a longitudinal axis X-X and is provided with a recess 3 delimiting a support head 4 connected to a casing 5 forming a handle. A connecting portion 6 forms a constriction between the head 4 and the handle 5. A knife holder 7, on which a cable sheath incision knife 8 (Fig. 2) is mounted, is received in a sliding manner in the body 2 along the axis X-X. The head 4 and the knife holder 7 are thus in movement relative to one another. The cutting end 9 (Fig. 2) of the knife 8 is S-shaped.

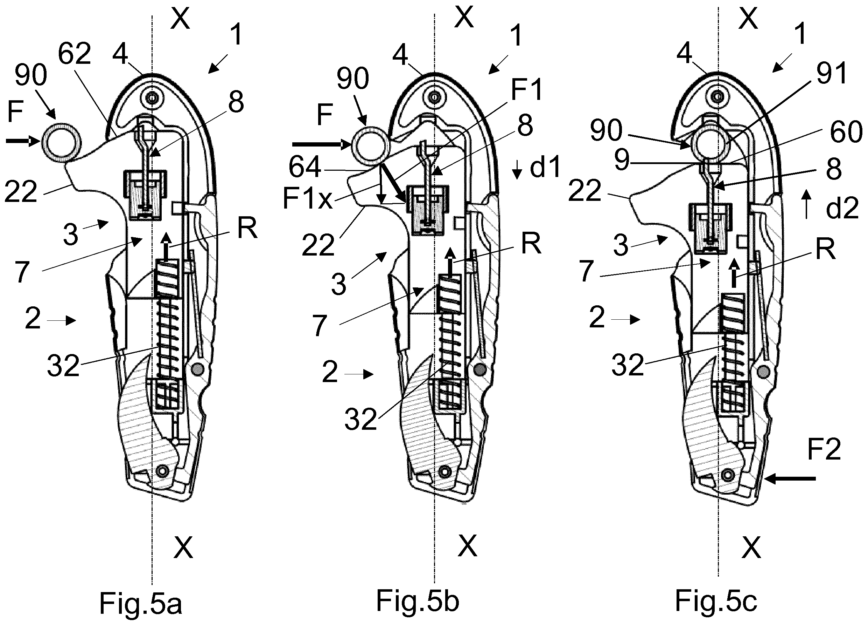

The body 2 is in the form of two shells 12a and 12b which are assembled by a screw 10. The shells are advantageously obtained by moulding a plastics material, respectively in one piece, which has the advantage of reducing the costs of production. Hook-shaped portions 14a and 14b form the support head 4 once they are assembled. The portions 14a and 14b respectively have a V-shaped inner form 16a and 16b which is capable of receiving a cable 90 (Fig. 5a to 5c). The portions 18a and 18b of the shells 12a and 12b opposite the hooks 14a and 14b form, once the shells are assembled, the gripping handle 5 of the tool. The gripping portion 18b comprises on the internal face a stop 19, the function of which will be described below.

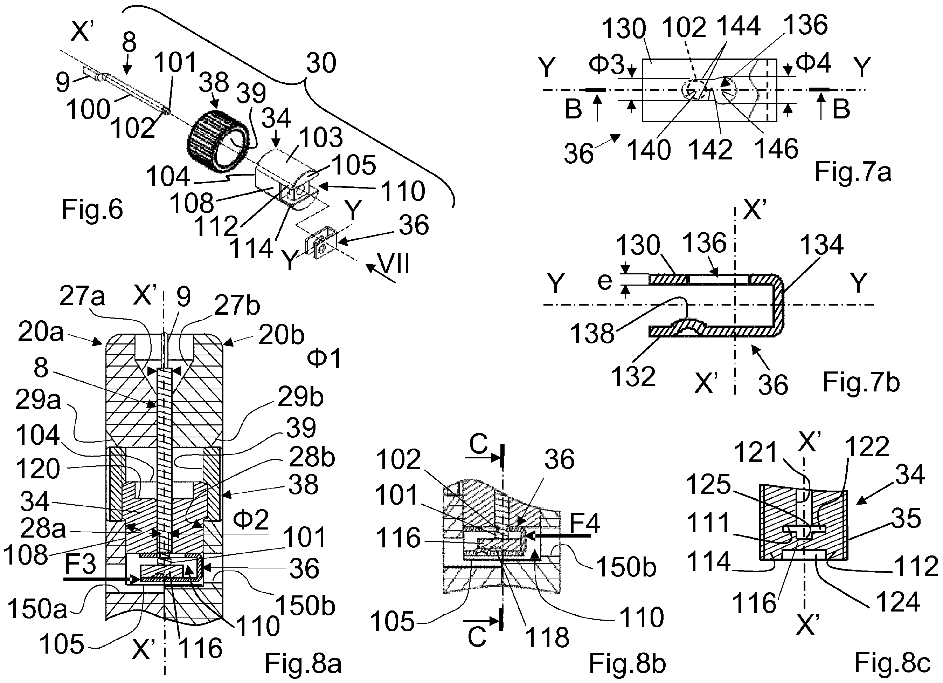

The knife holder 7 of the tool is in the form of two other, L-shaped shells 20a and 20b which are assembled by appropriate means. They respectively comprise a lateral branch 22a and 22b, forming a projection 22 once the shells are assembled, and a longitudinal branch 23a and 23b, provided with an external rib 24a and 24b for sliding guidance along the axis X-X of a semi-circular inner housing 26a and 26b. The shells 20a and 20b respectively comprise an inner cavity 27a (Fig. 8a) and 27b (Fig. 2 and 8a) in the shape of a half-funnel. The inner cavities are intended to receive the cutting portion 9 of the knife 8 in a rotatable manner. An inner recess 28a (Fig. 8a) and 28b (Fig. 2 and 8a) respectively extend each of the inner cavities 27a and 27b. The inner recesses 28a and 28b respectively open externally into an opening 29a (Fig. 2 and 8a) and 29b (Fig. 8a). When the shells 20a and 20b are assembled, the inner recesses are adapted to receive, by way of complementary shapes, an incision sub-assembly 30 comprising the knife 8.

A biasing means 32 of high rigidity, in the form of a helical compression spring, moves the knife holder 7 towards and clamps it in relation to the support head 4. For this purpose, the spring 32 rests on one hand on the base of the housings 26a and 26b of the knife holder 7 and on the other hand on the internal stop of the shell 12b of the body 2. The knife holder 7 is thus continuously biased towards the support head 4.

The incision sub-assembly 30 basically comprises a socket 34 which is provided with an external thread 35 (Fig. 8c) and supports the knife 8. A clip 36 releasably secures the knife 8 in relation to the socket 34. A knob 38 for adjusting the knife 8 comprises an internal tapping 39 (Fig. 6 and 8c) capable of interacting with the external thread 35 of the socket 34. Once the sub-assembly 30 has been arranged in the recesses 28a and 28b of the assembled shells 20a and 20b, the knob 38 is movable only in rotation in relation to an axis of rotation parallel to the axis X-X. The knob 38 is arranged in the openings 29a and 29b (Fig. 8a) of the knife holder 7 and is thus accessible manually from outside the knife holder 7. A screwing or unscrewing action on the knob 38 causes the axial sliding of the socket 34. Consequently, the height of the cutting portion 9 of the knife 8 which is extracted from the knife holder 7 can easily be adjusted by an external action on the knob 38.

The tool also comprises at least one auxiliary cutting blade 40, pivotally articulated to a pin 42 rigidly connected to the body 2 at the opposite end from the support head 4, and a member 44 for opening the blade 40, articulated to another pin 46 rigidly connected to the body 2. The auxiliary blade 40 is used for cutting work more commonly performed by the user.

The blade 40 is movable in a retractable manner between a rest position in which it is closed, retracted inside the body 2 (Fig. 3 and 5a to 5c) and a working position in which it is open, completely extended from the body 2 substantially in the longitudinal axis X-X (Fig. 4).

The main portion of the member 44 comprises a bore 48 capable of receiving the pin 46. The ends of the member 44 respectively comprise a first hook 50 and a second hook 52, the functions of which will be described below. A spring leaf 54 connected to the body 2 and to the member 44 resiliently biases the member 44.

In Fig. 3, 4 and 5a to 5c, the tool 1 is shown with the body 2 oriented substantially vertically, the support head 4 at the upper end of the body 2, the lateral projection 22 of the knife holder 7 on the left, the pin 42 at the lower end of the body, the auxiliary cutting blade 40 on the left in the closed position and the member 44 for opening the blade 40 on the right.

The upper portion of the knife holder 7 comprises an upper free end 60, beyond which the cutting portion 9 of the knife 8 extends. The face of the end 60 is substantially perpendicular to the longitudinal axis X-X. The projection 22 extends from the face of the end 60 in the direction transverse to the longitudinal axis X-X of the body 2.

The projection 22 is arranged, at least in part, in the recess 3 of the body 2 and extends laterally leftwards beyond the body 2. Said projection comprises an upper bearing face 62 which is inclined in relation to the longitudinal axis X-X, laterally from the free end 60 towards the end of the body 2 opposite the head 4, moving away from the axis X-X. The angle of inclination α between the face 62 and the longitudinal axis X-X is between 45° and 90°, preferably 65°, such that the angle of inclination β between the faces 60 and 62 is between 135° and 180°, preferably 155°.

The projection 22 constitutes a gripping means which is rigidly connected to the knife holder 7 for manoeuvring it. This gripping means is arranged adjacent to the free end 60 of the knife holder 7. Depending on the grip of the operator, the inclined bearing face 62 of the projection 22 is easily accessible by the index finger or the thumb of the hand which holds the body 2. A concave region 64 of large radius is formed in the portion of the face 62 which permanently extends laterally beyond the body 2.

This arrangement improves the ergonomics of the grip of the index finger or thumb.

In addition, the concave region 64 of the bearing face 62 is particularly well adapted for receiving a cable 90 (Fig. 5a to 5c) to be engaged in the inner forms 16a and 16b in the shape of an upside down V of the support head 4.

This has the advantage of providing the operator with a tool which is practical to use.

When the longitudinal branches 23a and 23b of the knife holder 7 are assembled, the knife holder 7 comprises, in the main portion thereof and on the lateral face thereof opposite the projection 22, a blind hole 70 adapted to receive the upper hook 50 of the member 44 for opening the auxiliary cutting blade 40.

While the blade 40 is at rest in the body 2, the lower hook 52 directed towards the pin 42 presses, under the action of the spring 54, on a substantially planar face 80 arranged at the end articulated at 42 of the blade 40. This firstly prevents any untimely opening of the blade 40 and secondly keeps the upper hook 50 directed towards the blind hole 70 with sufficient spacing from the hole 70 to allow the sliding of the knife holder 7 along the longitudinal axis X-X.

As soon as the blade 40 is partially displaced in rotation from the rest position, the inner hook 52 acts on a cam surface 82 which is adjacent to the flat portion 80 and arranged at the end articulated at 42 of the blade 40.

The completely open position of the blade 40 (Fig. 4) is defined by the snap-locking of the inner hook 52 in a notch 84 also arranged at the end articulated at 42 of the blade 40. The blade is then locked.

The shape of the cam surface 82 and the depth of the notch 84 are such that, under the rocking effect of the opening member 44, the upper hook 50 is engaged with the blind hole 70 when the blade 40 is extracted, at least in part, from the body 2 in the direction of the arrow d in Fig. 4.

The knife holder 7 is thus prevented from sliding along the longitudinal axis X-X when the blade 40 is partly or completely extended from the body 2, and this provides safety for the operator.

Fig. 5a to 5c show the placement of a cable in the support head of the tool.

Before the placement of the cable, the body 2 being grasped with the whole hand, the operator adjusts the projection height of the knife 8 by actuating the knob 38 at the level of the windows 29a and 29b of the knife holder 7, between the thumb and the index finger of the hand holding the body 2 or between those of the other hand.

He then positions the cable 90 to be stripped on the free end of the inclined upper face 62 of the projection 22 while applying an increasing force F substantially perpendicular to the longitudinal axis X-X (Fig. 5a).

The cable 90 slides over the concave region 64, exerting on the knife holder 7 an increasing force F1 (Fig. 5b), of which the component Fix (Fig. 5b) along the longitudinal axis X-X becomes greater than the axial reaction R of the compression spring 32. The knife holder 7 is displaced downwards, moving away from the head 4 in the direction of the arrow d1 (Fig. 5b), while the cable 90 is in abutment against the outer form of the head 4 in a configuration where there is instantaneously equilibrium of the forces present (Fig. 5b).

By substantially increasing the force F acting on the cable 90, the operator exceeds the friction forces of the edge of the head 4 acting on the cable 90. The component Fix becomes so great in relation to the reaction of the spring 32 that the knife holder 7 is displaced downwards, moving even further away from the head 4. The distance between the head 4 and the knife holder 7 is then sufficient for the cable 90 to fit and be wedged in the inner forms 16a and 16b in the shape of an upside down V of the head 4. The operator momentarily releases the force F on the cable 90 until it is cancelled, which has the result that the knife holder 7 is displaced upwards, moving closer to the head 4 in the direction of the arrow d2 under the effect of the axial reaction R of the spring 32 (Fig. 5c).

Since the knife holder 7 is continuously biased upwards, the incision knife 8 sinks into the sheath 91 (Fig. 5c) of the cable 90 until the upside down V of the head 4 centres the cable in a suitable, stable position for the cutting operations.

In a known manner, the operator then performs the circular incision of the sheath 91, pushing the lower end of the body 2 leftwards in the direction of the arrow F2 in Fig. 5c. The knife 3 is oriented such that the sheath 91 is then cut exactly at the preset depth and an additional rotation of the tool through a complete turn provides the circular cut of the sheath end to be removed.

Then, by turning his hand a quarter of a turn, the operator again grasps the body 2 with his whole hand and pulls it perpendicularly to the plane of Fig. 5c. The knife 8 then performs a longitudinal incision of the sheath end to be removed.

It should be noted that the knife 8 is mounted in a rotatable and eccentric manner in the knife holder 7, and this allows the cutting portion 9 to be oriented automatically either circumferentially or axially in relation to the cable 90 in the direction of the force exerted on the body 2.

Fig. 6, 7a and 7b, and 8a to 8c show another aspect of the present disclosure. In Fig. 6 the incision sub-assembly 30 extends along a longitudinal axis X'-X' substantially parallel to the axis X-X.

The knife 8 comprises, in its main portion, an elongated cylindrical shaft 100 of outer diameter Φ1 (Fig. 8a). The cutting portion 9 on one hand and an end 101 opposite the cutting portion 9 on the other hand delimit the shaft 100. The end 101 is provided with a circular groove 102, the diameter Φ2 of which (Fig. 8a) at the base of the groove is smaller than that of Φ1.

The socket 34 comprises a generally cylindrical barrel 103 which extends along the axis X'X', delimited by a first face 104 directed towards the cutting portion 9 of the knife and a face 105 directed towards the clip 36. The socket 34 comprises two diametrically opposed flat portions 108 (only one is visible in Fig. 6) extending in mutually parallel planes which are parallel to the axis X'X'. The flat portions 108 interact with the recesses 28a and 28b by complementarity of shape and ensure the longitudinal sliding of the socket 34 in relation to the knife holder 7.

Since the thread 35 of the socket 34 corresponds to the tapping 39 of the knob 38, a rotary action on the knob 38 in relation to the axis X'-X' causes a translatory movement of the socket 34. The user can thus preset the height of the cutting portion 9 of the knife 8 which projects from the face 60 of the knife holder 7.

The socket 34 also comprises a recess 110 (Fig. 8a and 8b) arranged transverse to the axis X'X'. The recess 110 opens at the face 105 and the flat portions 108. It delimits a base 111 (Fig. 8c) and two longitudinal wings 112 and 114 (Fig. 6 and 8c) connected by an intermediate bar 116 (Fig. 8a to 8c). Said bar is arranged in the recess 110, perpendicular to the axis X'X', set back from the face 105 and remote from the base 111. The bar 116 is provided with a blind bore 118 (Fig. 8b) in the longitudinal axis X'-X' of the socket and on the side of the face 105.

The face 104 comprises a counterbore 120 (Fig. 8a) extended by an axial passage 121 (Fig. 8c) opening at the base 111 of the recess 110. The passage 121 receives the shaft 100 of the knife 8 in a rotatable manner.

In Fig. 8c, only the socket 34 is shown for the sake of clarity of the drawing. The bar 116 divides the recess 110 into two portions, namely a first space 122 between the base 111 and the bar 116, and a second space 124 which is open towards the face 105. A channel 125 extends perpendicularly to the axis X'-X' and receives the end 101 of the shaft 100 of the knife.

In Fig. 7a and 7b, the clip 36 is a part of relatively low thickness e which is folded in a U shape and, preferably, made of metal. It comprises two branches 130 and 132 connected to a central portion 134. The branches 130 and 132 are arranged in parallel planes and substantially perpendicular to the axis X'X'. The central part 134 is arranged in a plane substantially parallel to the axis X'X' and perpendicular to the planes of the branches 130 and 132.

The clip 36 is received in a sliding manner in the recess 110 in a direction perpendicular to the axis X'X'. The branch 130 is arranged in the first space 122 and comprises an opening 136 obtained by cutting (Fig. 7a). The branch 132 is arranged in the second space 124 and comprises a boss 138 oriented towards the inside of the U, that is to say the convex shape of the boss 138 is turned towards the branch 130 (Fig. 7b).

The opening 136 in the branch 130 shown in Fig. 7a extends along an axis Y-Y perpendicular to the axis X'X'. Said opening has an elongated shape in the form of a "key seat". It comprises, as shown from left to right in Fig. 7a, a first curved cut 140 through approximately 180° and of diameter Φ3. The cut 140 is connected to a straight cut 142 delimited by two straight lines 144 parallel to the axis Y-Y. The width of the cut 142 is equal to the diameter Φ3. A second curved cut 146 through approximately 270° and of diameter Φ4, which is larger than the diameter Φ3, extends the straight cut 142 towards the right.

In terms of dimensions, the diameter Φ3 is smaller than the diameter Φ1 and larger than the diameter Φ2, while the diameter Φ4 is larger than the diameter Φ1. In addition, the thickness e of the branch 130 is smaller than the width of the groove 102.

The end 101 of the shaft 100 of the incision knife is thus capable of passing through the second cut 146. When the groove 102 is engaged in the opening 136, the cuts 140 and 142 are adapted to slide in the groove 102 in a relative movement substantially perpendicular to the axis X'X', a displacement along the axis X'X' being limited to the play between the thickness e of the branch 130 and the width of the groove 102.

Fig. 8a shows the clip 36 in a stable position in which it is locked relative to the knife 8, which cannot be disassembled from the socket 34.

In this position the groove 102 is engaged in the cuts 140 and 142, as shown by dashed lines in Fig. 7a, and the boss 138 is engaged in the blind bore 118 by complementarity of shape (Fig. 8a).

The shells 20a and 20b of the knife holder 7 respectively comprise a transverse passage 150a and 150b (Fig. 8a and 8b) giving access to the clip from the outside when the shells are assembled. The passages 150a and 150b open into one another with a slight axial offset.

To obtain the position in which the knife 8 is locked in relation to the socket 34, the user firstly acts, from the outside, by turning the knob 38 so as to position the clip 36 along the longitudinal axis X'-X', facing the passages 150a and 150b, the cutting portion of the knife 8 being virtually withdrawn inside the knife holder 7.

The user then acts on the free end of the branch 132 through the passage 150a formed in the shell 20a and arranged perpendicular to the axis X'-X' by exerting a force in the direction of the arrow F3 in Fig. 8a. The groove 102 is then engaged in the first curved cut 140 and in the small straight cut 142, and this has the effect of preventing any uncoupling between the knife 8 and the clip 36 in an axial movement along the axis X'-X'.

Depending on the intensity of use of the tool, the cutting portion 9 of the knife 8 is subjected to wear over time.

To change the knife 8, the user again acts, from the outside, by turning the knob 38 so as to position the clip 36 longitudinally such that it faces the passages 150a and 150b.

He then urges the clip 36 from the locked position (Fig. 8a) towards an unlocked position (Fig. 8b) by exerting a force on the central portion 134 in the direction of the arrow F4 in Fig. 8b through the passage 150b formed in the shell 20b and arranged perpendicular to the axis X'-X'.

When the clip 36 is in the unlocked position, the boss 138 is disengaged from the blind bore 118 and the groove 102 is engaged in the curved cut 146 of large diameter, and this has the effect of allowing the uncoupling between the knife 8 and the clip 36 in an axial movement along the axis X'-X'.

It should be noted that, in the locked position, as in the unlocked position, the clip 36 is arranged entirely in the recess 110, without projecting in relation to the two flat portions 108.

The user displaces the knife holder 7 against the spring 32 and inverts the tool 1 by directing the support head 4 downwards in order to extract the knife 8 from the knife holder 7 under the effect of gravity.

A new incision knife 8 is mounted by way of the reverse operations.

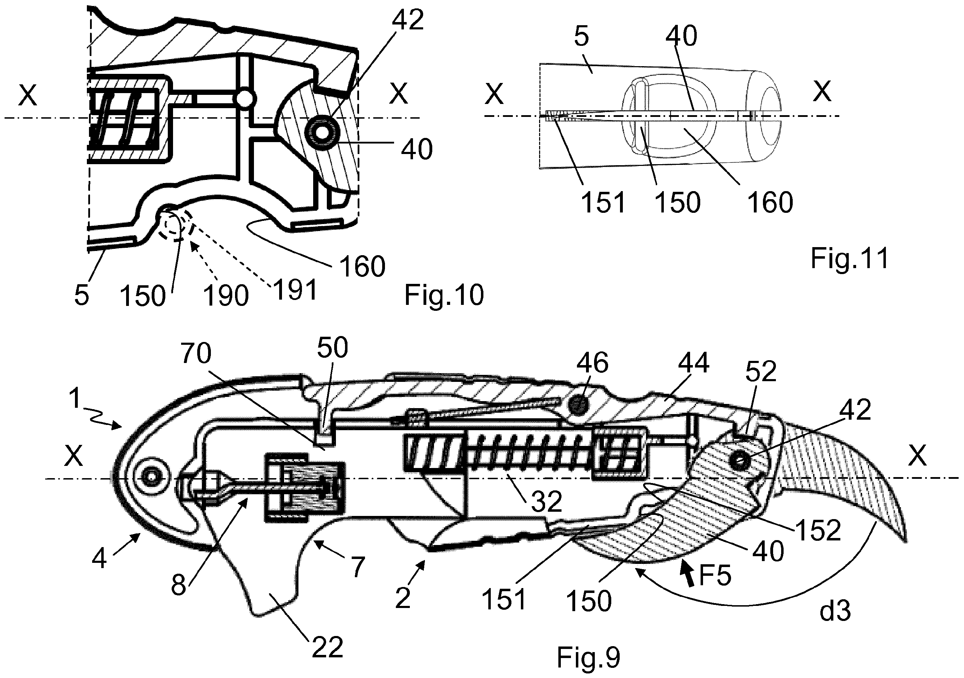

Fig. 9 to 11 show a third aspect of the invention.

The tool 1 has an additional stripping means adapted to a conductor of small diameter, such as an electric wire.

For this purpose, the casing 5 forming a handle comprises a channel 150 arranged perpendicular to the axis X-X of the body, the transverse profile of which channel, in the form of a partial circle, is adapted to receive a conductor 190 provided with a sheath 191 and shown by dashed lines in Fig. 10. The conductor has a small diameter compared with the diameter of a cable.

The channel 150 is arranged on the outer envelope of the casing 5, close to the pin 42 of the retractable cutting blade 40, on either side of a slot 151 in the body 2, in which slot the blade 40 is positioned when it is retracted inside the body.

The arrangement of the channel 150 is such that the cutting or sharp portion 152 (Fig. 9) of the blade 40 interferes in the profile of the channel 150 when the blade 40 is displaced in rotation between a position in which it is extended at least in part and a position in which it is retracted inside said body at least in part (Fig. 9). The cutting edge 152 faces the body 2 and the user cannot position a finger opposite the cutting edge. The safety of the user is thus improved.

In an advantageous manner the outer envelope of the casing 5 also comprises a notch 160 which also extends perpendicular to the axis X-X on either side of the slot 151. The notch 160 is also arranged close to the pin 42 and its concave shape is provided with the channel 150.

The operator uses the notch 160 to grasp the blade 40 between thumb and index finger when said blade is in a retracted position inside the body 2. He can thus easily extract the blade 40 from the casing 5.

To strip the conductor 190, the operator extracts the blade 40 from the body 2, at least in part, allowing full access to the channel, for example in a completely extended position.

He then places the conductor 190 to be stripped in the channel 150 and positions the cutting edge 152 of the blade 40 in contact with the conductor by rotating the blade 40 in relation to the pin 42 in the direction of the arrow d3 in Fig. 9.

The user keeps the conductor 190 clamped between the blade 40 and the channel 150 by exerting a pushing force in the direction of the arrow F5 in Fig. 9 on the back of the blade 40 by means of his thumb, while applying a reaction force by means of his index finger on the face of the casing 5 which is opposite the blade 40.

He then causes one of the tool and the conductor to rotate in relation to the other along the axis of the channel 150 through an angle of approximately 180° in one direction and then in the other.

The sheath 191 of the conductor 190 is cut sufficiently over its circumference to expose the metal core of the conductor over the desired length.

The user thus benefits from a simple and effective arrangement for stripping a conductor of small diameter. This arrangement is applicable to a stripping tool at least provided with a body and a pivoting and retractable cutting blade, such as an electrician's knife.

Owing to the invention, the user can work effectively and quickly to strip a cable. He performs his tasks ergonomically and safely. In addition, he can change the incision knife rapidly without disassembling the tool completely. The tool also makes it possible to strip a conductor easily by means of a retractable cutting blade. Finally, the tool is simple, compact and economical to produce.

## Claims

1. Electrician's tool having a foldable blade for stripping an electrical conductor, the tool being of the type comprising
an elongated body (2) which extends along a longitudinal axis X-X;
at least one retractable cutting blade (40) comprising a notch (84), wherein the blade (40) is pivotally articulated to the body (2), the blade (40) being movable between a rest position in which it is closed, retracted inside the body (2), and a working position in which it is open, completely extended from the body (2);
a knife holder (7) disposed within the body (2) and configured to slide along the longitudinal axis X-X, and wherein said knife holder defines a blind hole (70); **characterised in that**
an opening member (44) is pivotally connected to the body (2), and comprising a first hook (50) and a second hook (52), and wherein the first hook (50) is adapted to be received by the blind hole (70), and wherein the second hook (52) is configured to be engaged to the notch (84);
a spring leaf (54) is connected to the body (2) and member (44), wherein the spring leaf (54) is configured to bias the member (44); and when the blade (40) is in the rest position the second hook (52) is not engaged to the notch (84), and when the blade is in the working position, the second hook (52) is engaged to the notch (84) thereby locking the blade (40) in the working position; and
when the blade (40) is in the rest position, the first hook (50) is disengaged from the blind hole (70) and the knife holder (7) is permitted to slide, and when the blade (40) is in the working position, the first hook is disposed within the blind hole (70) and the knife holder (7) is prevented from sliding.

2. Tool according to claim 1, **characterised in that** the body (2) further comprises a notch (160) having a concave shape, and **in that** the notch (160) is provided with a channel (150) which is transverse in relation to the axis X-X and intended to receive an electrical conductor, the cutting edge (152) of the blade (40) interfering in the profile of the channel (150) in order to strip the conductor when the blade (40) is in a virtually closed position.

3. Tool according to either claim 1 or claim 2, **characterised in that** the tool is a knife.

4. Tool according to any of claims 1 to 3, **characterised in that** the body (2) is further provided with a recess (3) delimiting a cable support head (4) and the knife holder (7) further includes a free end (60) which is arranged in the recess (3), facing the support head (4); a cable sheath incision knife (8) which is supported by the knife holder (7) and the cutting portion (9) of which is capable of extending beyond the free end (60) of the knife holder (7); a biasing means (32) which acts on the knife holder (7) to displace it towards the support head (4); a gripping means (22) which is rigidly connected to the knife holder (7) for manoeuvring it; the knife holder (7) being movable between an advanced position in which the incision knife (8) is moved closer to the support head (4) under the action of the biasing means (32) and a retracted position in which the incision knife (8) is moved away from the support head (4) against the action of the biasing means (32), the gripping means (22) being arranged adjacent to the free end (60) of the knife holder (7) and comprising a bearing face (62) adapted to receive the cable to be engaged in the support head (4).

5. Tool according to claim 4, **characterised in that** the bearing face (62) is oriented in relation to the longitudinal axis X-X such that a force F applied to the cable in a direction substantially transverse to the sliding direction of the knife holder (7) acts on the knife holder (7) with an axial force component Fix capable of displacing the knife holder (7) from its advanced position towards its retracted position against the action R of the biasing means (32).

6. Tool according to either claim 4 or claim 5, **characterised in that** the gripping means (22) is arranged so as to project laterally, at least in part, from the support head (4), and **in that** the bearing face (62) is inclined in relation to the longitudinal axis X-X of the body (2), laterally from the end (60) of the knife holder (7) towards the end of the body (2) opposite the head (4), moving away from the longitudinal axis X-X, the inclination being between 45° and 90°, preferably 65°.

7. Tool according to any of claims 1 to 3, **characterised in that** the body (2) further comprises a cable support head (4) in relative movement in relation to a knife holder (7) which is connected to the body (2), and **in that** the knife holder (7) receives a socket (34) supporting an incision knife (8) provided with a shaft (100), and **in that** a clip (36) arranged in a movable manner inside the socket (34) is provided with a locking/unlocking opening (136) intended to interact with a groove (102) arranged on the shaft (100) of the knife (8).

8. Tool according to claim 7, **characterised in that** the knife holder (7) receives the socket (34) in a sliding manner substantially along the longitudinal axis X-X.

9. Tool according to claim 8, **characterised in that** the knife holder (7) receives a knob (38) such that said knob can rotate relative to the knife holder (7), which knob is provided with an internal tapping (39) which acts on an external thread (35) of the socket (34) in order to displace it in a sliding manner.

## Patentansprüche

1. Elektrikerwerkzeug mit einer faltbaren Klinge zum Abisolieren eines elektrischen Leiters, wobei das Werkzeug von der Art ist, die umfasst:
einen gestreckten Körper (2), der sich entlang einer Längsachse X-X erstreckt;
mindestens eine einziehbare Schneidklinge (40), die eine Einkerbung (84) umfasst, wobei die Klinge (40) an dem Körper (2) schwenkbar angelenkt ist, wobei die Klinge (40) zwischen einer Ruheposition, in welcher sie geschlossen im Inneren des Körpers (2) eingezogen ist, und einer Arbeitsposition, in welcher sie geöffnet vollständig aus dem Körper (2) ausgefahren ist, bewegbar ist;
eine Messerhalterung (7), die innerhalb des Körpers (2) angeordnet und eingerichtet ist, um sich entlang der Längsachse X-X zu verschieben, und wobei die Messerhalterung ein Sackloch (70) definiert;
**dadurch gekennzeichnet, dass**
ein Öffnungsglied (44) schwenkbar mit dem Körper (2) verbunden ist, und einen ersten Haken (50) und einen zweiten Haken (52) umfasst, und wobei der erste Haken (50) angepasst ist, um von dem Sackloch (70) aufgenommen zu werden, und wobei der zweite Haken (52) eingerichtet ist, um mit der Einkerbung (84) in Eingriff gebracht zu werden;
ein Federblatt (54) mit dem Körper (2) und dem Glied (44) verbunden ist, wobei das Federblatt (54) eingerichtet ist, um das Glied (44) vorzuspannen; und
wenn die Klinge (40) sich in der Ruheposition befindet, der zweite Haken (52) nicht mit der Einkerbung (84) eingreift, und wenn die Klinge sich in der Arbeitsposition befindet, der zweite Haken (52) mit der Einkerbung (84) eingreift und dadurch die Klinge (40) in der Arbeitsposition arretiert; und
wenn die Klinge (40) sich in der Ruheposition befindet, der erste Haken (50) von dem Sackloch (70) gelöst ist, und es der Messerhalterung (7) gestattet ist, sich zu verschieben, und wenn die Klinge (40) sich in der Arbeitsposition befindet, der erste Haken sich innerhalb des Sacklochs (70) befindet und verhindert wird, dass die Messerhalterung (7) sich verschiebt.

2. Werkzeug nach Anspruch 1, **dadurch gekennzeichnet, dass** der Körper (2) weiter eine Einkerbung (160) mit einer konkaven Form umfasst, und dass die Einkerbung (160) mit einem Kanal (150) versehen ist, der in Bezug auf die Achse X-X quer verläuft und einen elektrischen Leiter aufnehmen soll, wobei die Schneidekante (152) der Klinge (40) in das Profil des Kanals (150) interferiert, um den Leiter abzuisolieren, wenn die Klinge (40) sich in einer vertikal geschlossenen Position befindet.

3. Werkzeug nach Anspruch 1 oder Anspruch 2, **dadurch gekennzeichnet, dass** das Werkzeug ein Messer ist.

4. Werkzeug nach einem der Ansprüche 1 bis 3, **dadurch gekennzeichnet, dass** der Körper (2) weiter mit einer Aussparung (3) versehen ist, die einen Kabelträgerkopf (4) begrenzt, und die Messerhalterung (7) weiter ein freies Ende (60) beinhaltet, das dem Trägerkopf (4) zugewandt in der Aussparung (3) angeordnet ist; ein Kabelummantelungseinschnittmesser (8), das von der Messerhalterung (7) getragen wird, und dessen Schneidebereich (9) in der Lage ist, über das freie Ende (60) der Messerhalterung (7) hinaus ausgefahren zu werden; ein Vorspannmittel (32), das auf die Messerhalterung (7) wirkt, um diese hin zu dem Trägerkopf (4) zu versetzen; ein Greifmittel (22), das fest mit der Messerhalterung (7) verbunden ist, um diese zu manövrieren; wobei die Messerhalterung (7) zwischen einer vorgerückten Position, in welcher das Einschnittmesser (8) unter Wirkung des Vorspannmittels (32) näher zu dem Trägerkopf (4) bewegt ist, und einer eingezogenen Position, in welcher das Einschnittmesser (8) entgegen der Wirkung des Vorspannmittels (32) weg von dem Trägerkopf (4) bewegt ist, bewegbar ist, wobei das Greifmittel (22) benachbart zu dem freien Ende (60) der Messerhalterung (7) angeordnet ist und eine Lagerfläche (62) umfasst, die angepasst ist, um das Kabel aufzunehmen, das in dem Trägerkopf (4) in Eingriff zu bringen ist.

5. Werkzeug nach Anspruch 4, **dadurch gekennzeichnet, dass** die Lagerfläche (62) in Bezug auf die Längsachse X-X derart orientiert ist, dass eine Kraft F, die in einer Richtung im Wesentlichen quer zu der Verschieberichtung der Messerhalterung (7) auf das Kabel aufgebracht wird, mit einer axialen Kraftkomponente F1x auf die Messerhalterung (7) wirkt, die in der Lage ist, die Messerhalterung (7) von ihrer vorgerückten Position hin zu ihrer eingezogenen Position entgegen der Wirkung R des Vorspannmittels (32) zu versetzen.

6. Werkzeug nach Anspruch 4 oder Anspruch 5, **dadurch gekennzeichnet, dass** das Greifmittel (22) derart angeordnet ist, dass es mindestens teilweise seitlich von dem Trägerkopf (4) hervorsteht, und dass die Lagerfläche (62) in Bezug auf die Längsachse X-X des Körpers (2) seitlich von dem Ende (60) der Messerhalterung (7) hin zu dem Ende des Körpers (2) gegenüber des Kopfes (4), sich weg von der Längsachse X-X bewegend, geneigt ist, wobei die Neigung zwischen 45° und 90° beträgt, vorzugsweise 65°.

7. Werkzeug nach einem der Ansprüche 1 bis 3, **dadurch gekennzeichnet, dass** der Körper (2) weiter einen Kabelträgerkopf (4) umfasst, der sich in Bezug auf eine Messerhalterung (7), die mit dem Körper (2) verbunden ist, in relativer Bewegung befindet, und dass die Messerhalterung (7) eine Fassung (34) aufnimmt, die ein Einschnittmesser (8) trägt, das mit einer Welle (100) versehen ist, und dass eine Klammer (36), die auf eine bewegbare Weise im Inneren der Fassung (34) angeordnet ist, mit einer Verriegelungs-/Entriegelungsöffnung (136) versehen ist, die mit einer Nut (102) zusammenwirken soll, die auf der Welle (100) des Messers (8) angeordnet ist.

8. Werkzeug nach Anspruch 7, **dadurch gekennzeichnet, dass** die Messerhalterung (7) die Fassung (34) auf eine im Wesentlichen entlang der Längsachse X-X verschiebbare Weise aufnimmt.

9. Werkzeug nach Anspruch 8, **dadurch gekennzeichnet, dass** die Messerhalterung (7) einen Knauf (38) derart aufnimmt, dass der Knauf sich relativ zu der Messerhalterung (7) drehen kann, wobei der Knauf mit einem Innengewinde (39) versehen ist, das auf ein Außengewinde (35) der Fassung (34) wirkt, um diese auf verschiebbare Weise zu versetzen.

## Revendications

1. Outil d'électricien ayant une lame pliable pour dénuder un conducteur électrique, l'outil étant du type comprenant
un corps allongé (2) qui s'étend le long d'un axe longitudinal X-X ;
au moins une lame coupante rétractable (40) comprenant une encoche (84), dans lequel la lame (40) est articulée de manière pivotante par rapport au corps (2), la lame (40) pouvant être déplacée entre une position de repos dans laquelle elle est fermée, rétractée à l'intérieur du corps (2), et une position de travail dans laquelle elle est ouverte, complètement sortie du corps (2) ;
un porte-couteau (7) disposé dans le corps (2) et configuré pour coulisser le long de l'axe longitudinal X-X, et dans lequel ledit porte-couteau définit un trou borgne (70) ; **caractérisé en ce que**
un élément d'ouverture (44) est relié de manière pivotante au corps (2) et comprenant un premier crochet (50) et un second crochet (52), et dans lequel le premier crochet (50) est adapté pour être reçu par le trou borgne (70), et dans lequel le second crochet (52) est configuré pour être mis en prise dans l'encoche (84) ;
une lame de ressort (54) est reliée au corps (2) et à l'élément (44), dans lequel la lame de ressort (54) est configurée pour solliciter l'élément (44) ; et
lorsque la lame (40) est dans la position de repos, le second crochet (52) n'est pas mis en prise dans l'encoche (84) et lorsque la lame est dans la position de travail, le second crochet (52) est mis en prise dans l'encoche (84), en verrouillant ainsi la lame (40) dans position de travail ; et
lorsque la lame (40) est dans la position de repos, le premier crochet (50) est libéré du trou borgne (70) et le porte-couteau (7) est autorisé à coulisser, et lorsque la lame (40) est dans la position de travail, le premier crochet est disposé dans le trou borgne (70) et le porte-couteau (7) est empêché de coulisser.

2. Outil selon la revendication 1, **caractérisé en ce que** le corps (2) comprend en outre une encoche (160) de forme concave, et **en ce que** l'encoche (160) est munie d'un canal (150) qui est transversal par rapport à l'axe X-X et destiné à recevoir un conducteur électrique, le bord coupant (152) de la lame (40) interférant dans le profil du canal (150) afin de dénuder le conducteur lorsque la lame (40) est dans une position pratiquement fermée.

3. Outil selon l'une des revendications 1 ou 2, **caractérisé en ce que** l'outil est un couteau.

4. Outil selon l'une quelconque des revendications 1 à 3, **caractérisé en ce que** le corps (2) est en outre pourvu d'un évidement (3) délimitant une tête de support de câble (4) et le porte-couteau (7) inclut en outre une extrémité libre (60) qui est agencée dans l'évidement (3), en regard de la tête de support (4) ; un couteau d'incision de gaine de câble (8) qui est supporté par le porte-couteau (7) et dont la partie coupante (9) est capable de s'étendre au-delà de l'extrémité libre (60) du porte-couteau (7) ; un moyen de sollicitation (32) qui agit sur le porte-couteau (7) pour le déplacer vers la tête de support (4) ; un moyen de préhension (22) qui est relié de manière rigide au porte-couteau (7) pour le manoeuvrer; le porte-couteau (7) pouvant être déplacé entre une position avancée dans laquelle le couteau d'incision (8) est rapproché de la tête de support (4) sous l'action du moyen de sollicitation (32) et une position rétractée dans laquelle le couteau d'incision (8) est éloigné de la tête de support (4) à l'encontre de l'action du moyen de sollicitation (32), le moyen de préhension (22) étant agencé adjacent à l'extrémité libre (60) du porte-couteau (7) et comprenant une face d'appui (62) adaptée pour recevoir le câble devant être mis en prise dans la tête de support (4).

5. Outil selon la revendication 4, **caractérisé en ce que** la face d'appui (62) est orientée par rapport à l'axe longitudinal X-X de telle sorte qu'une force F appliquée au câble dans une direction sensiblement transversale à la direction de coulissement du porte-couteau (7) agit sur le porte-couteau (7) avec une composante de force axiale F1x capable de déplacer le porte-couteau (7) de sa position avancée vers sa position rétractée à l'encontre de l'action R du moyen de rappel (32).

6. Outil selon la revendication 4 ou la revendication 5, **caractérisé en ce que** le moyen de préhension (22) est agencé de manière à faire saillie latéralement, au moins en partie, à partir de la tête de support (4), et **en ce que** la face d'appui (62) est inclinée par rapport à l'axe longitudinal X-X du corps (2), latéralement à partir de l'extrémité (60) du porte-couteau (7) vers l'extrémité du corps (2) opposée à la tête (4), en s'éloignant de l'axe longitudinal X-X, l'inclinaison étant comprise entre 45° et 90°, de préférence de 65°.

7. Outil selon l'une quelconque des revendications 1 à 3, **caractérisé en ce que** le corps (2) comprend en outre une tête de support de câble (4) en mouvement relatif par rapport à un porte-couteau (7) qui est relié au corps (2), et **en ce que** le porte-couteau (7) reçoit une douille (34) supportant un couteau d'incision (8) muni d'un arbre (100), et **en ce qu'**une attache (36) agencée de manière mobile à l'intérieur de la douille (34) est munie d'une ouverture de verrouillage/déverrouillage (136) destinée à coopérer avec une rainure (102) agencée sur l'arbre (100) du couteau (8).

8. Outil selon la revendication 7, **caractérisé en ce que** le porte-couteau (7) reçoit la douille (34) de manière coulissante sensiblement le long de l'axe longitudinal X-X.

9. Outil selon la revendication 8, **caractérisé en ce que** le porte-couteau (7) reçoit une molette (38) de telle sorte que ladite molette tourner par rapport au porte-couteau (7), laquelle molette est munie d'un taraudage interne (39) qui agit sur un filetage externe (35) de la douille (34) afin de la déplacer de manière coulissante.
